# EUROPEAN PATENT APPLICATION

(11) **EP 4 629 159 A1**
(43) Date of publication of application: **08.10.2025**
(21) Application number: 23915568.2
(22) Date of filing: 10.08.2023
(51) Int. Cl.: G06Q 30/0601

(54) **TELEX MESSAGE PROCESSING METHOD AND APPARATUS, ELECTRONIC DEVICE, AND COMPUTER STORAGE MEDIUM**

(30) Priority: 10.01.2023 CN 202310032788
(71) Applicant: Travelsky Technology Limited, Beijing 101318 (CN)
(72) Inventor: XIONG, Guomin, Beijing 101318 (CN); WANG, Yichao, Beijing 101318 (CN); TU, Weiping, Beijing 101318 (CN); LIN, Tong, Beijing 101318 (CN); SU, Mei, Beijing 101318 (CN)
(74) Representative: Meissner Bolte Partnerschaft mbB
(86) International application number: PCT/CN2023/112152
(87) International publication number: WO 2024/148807

(57) **Abstract**

Provided in the present application are a telex message processing method and apparatus, an electronic device, and a computer storage medium. The telex message processing method includes: receiving a telex message for special services regarding passenger travel documents, where the telex message for special services regarding passenger travel documents includes a passenger list record number and an action code; obtaining a customer travel record with the same passenger record number based on the passenger list record number; then, determining a target processing method corresponding to a type of the action code; and finally, completing processing of the telex message for special services regarding passenger travel documents based on the customer travel record and the target processing method. Thus, the processing of the telex message for special services regarding passenger travel documents that includes different types of action codes is achieved.

## Description

This patent application claims the priority of Chinese Patent Application No. 202310032788.3, entitled "TELEX MESSAGE PROCESSING METHOD AND APPARATUS, ELECTRONIC DEVICE, AND COMPUTER STORAGE MEDIUM" filed with the China National Intellectual Property Administration on January, 10, 2023, the disclosure of which is incorporated by reference herein in its entirety.

### TECHNICAL FIELD

The present application relates to the technical field of computers, in particular to a telex message processing method and apparatus, an electronic device, and a computer storage medium.

### BACKGROUND

The customer travel record (CTR) based on open-platform storage technology is the core data of a civil aviation open passenger reservation system, which records data of the whole-process data of passenger travel from reservation sales, passenger services to travel delivery. The civil aviation open passenger reservation system is responsible for synchronization and management of CTR data, implements a reservation transaction process based on the CTR data, provides airline customers with reservation of flights and additional service products, offers differentiated reservation services relying on passenger value, supports reservation and retail needs of airlines, and tracks changes in passenger reservation statuses.

When the civil aviation open passenger reservation system reserves flight segments of foreign airlines from a foreign reservation system, it will also send special service information regarding passenger travel documents (SSR DOCS) to the foreign reservation system. When the special service information regarding passenger travel documents of the foreign airline changes, the changed content will be transmitted to the civil aviation open passenger reservation system in the form of a telex message for special services regarding passenger travel documents, which will be received and processed by the civil aviation open passenger reservation system.

In particular, when the special service information regarding passenger travel documents of the foreign airline changes, the telex message for special services regarding passenger travel documents will record the changed special service information regarding passenger travel documents. Therefore, when the current civil aviation open passenger reservation system receives and processes the telex message for special services regarding passenger travel documents, it also needs to handle the issue regarding different types of action codes included in the telex message for special services regarding passenger travel documents. However, there is currently no relevant processing method.

### SUMMARY

In view of this, the present application provides a telex message processing method and apparatus, an electronic device, and a computer storage medium. Processing of a telex message for special services regarding passenger travel documents that includes different types of action codes is achieved.

In a first aspect, the present application provides a telex message processing method, including:
receiving a telex message for special services regarding passenger travel documents, where the telex message for special services regarding passenger travel documents includes a passenger list record number and an action code;
obtaining a customer travel record with the same passenger record number based on the passenger list record number;
determining a target processing method corresponding to a type of the action code; and
completing processing of the telex message for special services regarding passenger travel documents based on the customer travel record and the target processing method.

Optionally, if the type of the action code is HK, the completing processing of the telex message for special services regarding passenger travel documents based on the customer travel record and the target processing method includes:
determining whether there is an activity special service item in the customer travel record that matches the telex message for special services regarding travel documents;
if it is determined that there is the activity special service item in the customer travel record that matches the telex message for special services regarding travel documents, confirming that there is already the same content; or
if it is determined that there is no activity special service item in the customer travel record that matches the telex message for special services regarding travel documents, adding special service information regarding passenger travel documents in the customer travel record, where the special service information regarding passenger travel documents contains two parts of general content and specific content, the general content includes an SSR type, an airline, an action code, the number of associated passengers, whether it is an automatic type, an associated flight departure city, an associated flight destination city, an associated flight number, an associated flight suffix, an associated flight class, an associated flight date, a free text, a creation sequence number, whether it is an inactive element, whether it is a public item, and a sequence number in the customer travel record, and the specific content includes a passenger travel document type, a passenger travel document issuing country, a passenger travel document number, a passenger's date of birth recorded on a passenger travel document, passenger's gender recorded on the passenger travel document, an expiration date of the passenger travel document, a passenger's surname recorded on the passenger travel document, and a passenger's first name recorded on the passenger travel document.

Optionally, if the type of the action code is NO, the completing processing of the telex message for special services regarding passenger travel documents based on the customer travel record and the target processing method includes:
determining whether there is an activity special service item in the customer travel record that matches the telex message for special services regarding travel documents;
if it is determined that there is the activity special service item in the customer travel record that matches the telex message for special services regarding travel documents, determining whether action code content of the activity special service item is target content, where the target content is HK;
if it is determined that the action code content of the activity special service item is the target content, modifying the action code content of the activity special service item to NO, and modifying creation sequence number content of the activity special service item to a current update number; or
if it is determined that there is no activity special service item in the customer travel record that matches the telex message for special services regarding travel documents, confirming that there is no such content.

Optionally, if the type of the action code is HX or XX, the completing processing of the telex message for special services regarding passenger travel documents based on the customer travel record and the target processing method includes:
determining whether there is an activity special service item in the customer travel record that matches the telex message for special services regarding travel documents;
if it is determined that there is the activity special service item in the customer travel record that matches the telex message for special services regarding travel documents, determining whether action code content of the activity special service item is target content, where the target content is HK;
if it is determined that the action code content of the activity special service item is the target content, modifying the action code content of the activity special service item to XX, modifying creation sequence number content of the activity special service item to a current update number, and modifying content of whether it is an inactive element of the activity special service item to TRUE; or
if it is determined that there is no activity special service item in the customer travel record that matches the telex message for special services regarding travel documents, confirming that there is no such content.

In a second aspect, the present application provides a telex message processing apparatus, including:
a receiving unit, configured to receive a telex message for special services regarding passenger travel documents, where the telex message for special services regarding passenger travel documents includes a passenger list record number and an action code;
an obtaining unit, configured to obtain a customer travel record with the same passenger record number based on the passenger list record number;
a determination unit, configured to determine a target processing method corresponding to a type of the action code; and
a processing unit, configured to complete processing of the telex message for special services regarding passenger travel documents based on the customer travel record and the target processing method.

Optionally, if the type of the action code is HK, the processing unit includes:
a first determination unit, configured to determine whether there is an activity special service item in the customer travel record that matches the telex message for special services regarding travel documents;
a first confirmation unit, configured to confirm that there is already the same content if the first determination unit determines that there is the activity special service item in the customer travel record that matches the telex message for special services regarding travel documents;
an addition unit, configured to add, if the first determination unit determines that there is no activity special service item in the customer travel record that matches the telex message for special services regarding travel documents, special service information regarding passenger travel documents in the customer travel record, where the special service information regarding passenger travel documents contains two parts of general content and specific content, the general content includes an SSR type, an airline, an action code, the number of associated passengers, whether it is an automatic type, an associated flight departure city, an associated flight destination city, an associated flight number, an associated flight suffix, an associated flight class, an associated flight date, a free text, a creation sequence number, whether it is an inactive element, whether it is a public item, and a sequence number in the customer travel record, and the specific content includes a passenger travel document type, a passenger travel document issuing country, a passenger travel document number, a passenger's date of birth recorded on a passenger travel document, passenger's gender recorded on the passenger travel document, an expiration date of the passenger travel document, a passenger's surname recorded on the passenger travel document, and a passenger's first name recorded on the passenger travel document.

Optionally, if the type of the action code is NO, the processing unit includes:
a second determination unit, configured to determine whether there is an activity special service item in the customer travel record that matches the telex message for special services regarding travel documents;
a third determination unit, configured to determine whether action code content of the activity special service item is target content if the second determination unit determines that there is the activity special service item in the customer travel record that matches the telex message for special services regarding travel documents, where the target content is HK or KK;
a first modification unit, configured to modify, if the third determination unit determines that the action code content of the activity special service item is the target content, the action code content of the activity special service item to NO, and modify creation sequence number content of the activity special service item to a current update number; and
a second confirmation unit, configured to confirm that there is no such content if the second determination unit determines that there is no activity special service item in the customer travel record that matches the telex message for special services regarding travel documents.

Optionally, if the type of the action code is HX or XX, the processing unit includes:
a fourth determination unit, configured to determine whether there is an activity special service item in the customer travel record that matches the telex message for special services regarding travel documents;
a fifth determination unit, configured to determine whether action code content of the activity special service item is target content if the fourth determination unit determines that there is the activity special service item in the customer travel record that matches the telex message for special services regarding travel documents, where the target content is HK or KK;
a second modification unit, configured to modify, if the fourth determination unit determines that the action code content of the activity special service item is the target content, the action code content of the activity special service item to XX, modify creation sequence number content of the activity special service item to a current update number, and modify content of whether it is an inactive element of the activity special service item to TRUE; and
a third confirmation unit, configured to confirm that there is no such content if the fourth determination unit determines that there is no activity special service item in the customer travel record that matches the telex message for special services regarding travel documents.

In a third aspect, the present application provides an electronic device, including:
one or more processors; and
a storage apparatus having one or more programs stored thereon, where
when the one or more programs are executed by the one or more processors, the one or more processors implement the telex message processing method according to any one in the first aspect.

In a fourth aspect, the present application provides a computer storage medium having a computer program stored thereon, where when the computer program is executed by a processor, the telex message processing method according to any one in the first aspect is implemented.

It can be seen from the above solutions that the present application provides a telex message processing method and apparatus, an electronic device, and a computer storage medium. The telex message processing method includes: receiving a telex message for special services regarding passenger travel documents, where the telex message for special services regarding passenger travel documents includes a passenger list record number and an action code; obtaining a customer travel record with the same passenger record number based on the passenger list record number; then, determining a target processing method corresponding to a type of the action code; and finally, completing processing of the telex message for special services regarding passenger travel documents based on the customer travel record and the target processing method. Thus, the processing of the telex message for special services regarding passenger travel documents that includes different types of action codes is achieved.

### BRIEF DESCRIPTION OF THE DRAWINGS

To more clearly illustrate the technical solutions in the embodiments of the present application or the prior art, the accompanying drawings that need to be used in the description of the embodiments or the prior art will be briefly introduced below. Apparently, the accompanying drawings in the description below merely illustrate the embodiments of the present application. Those of ordinary skill in the art can also derive other accompanying drawings from the provided accompanying drawings without creative efforts.
FIG. 1 is a specific flowchart of a telex message processing method provided by an embodiment of the present application;
FIG. 2 is a flowchart of a telex message processing method provided by another embodiment of the present application;
FIG. 3 is a flowchart of a telex message processing method provided by another embodiment of the present application;
FIG. 4 is a flowchart of a telex message processing method provided by another embodiment of the present application;
FIG. 5 is a flowchart of a telex message processing apparatus provided by another embodiment of the present application; and
FIG. 6 is a flowchart of an electronic device for implementing a telex message processing method provided by another embodiment of the present application.

### DETAILED DESCRIPTION OF THE EMBODIMENTS

The technical solutions in the embodiments of the present application will be clearly and completely described below with reference to the accompanying drawings in the embodiments of the present application. Apparently, the described embodiments are merely some rather than all of the embodiments of the present application. All other embodiments obtained by those of ordinary skill in the art based on the embodiments in the present application without creative efforts shall fall within the scope of protection of the present application.

The term "include" and its variations used herein are open, that is, "including but not limited to". The term "based on" means "at least partially based on". The term "one embodiment" means "at least one embodiment"; the term "another embodiment" means "at least one another embodiment"; and the term "some embodiments" means "at least some embodiments". Related definitions of other terms are given in the following descriptions.

It is to be noted that the concepts such as "first", "second" mentioned in the present application are only used to distinguish different apparatuses, modules or units, and are not used to define an order of functions performed by these apparatuses, modules or units or their interdependent relationships.

It is to be noted that the modifiers "one" and "a plurality of" mentioned in the present application are illustrative rather than restrictive. Those skilled in the art should understand that the modifiers should be understood as "one or more" unless otherwise explicitly specified in the context.

First, the terms that appear in the present application are explained as follows:
HK: Confirmation of seats available.
NO: No seats available; currently not for sale or all sold out.
XX: Seat cancellation.
HX: Seat deletion.

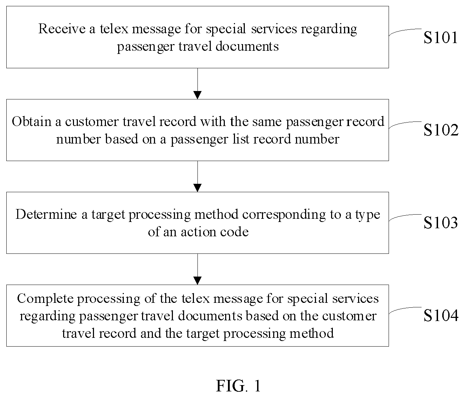

An embodiment of the present application provides a telex message processing method, as shown in FIG. 1, specifically including the following steps:
S101: receiving a telex message for special services regarding passenger travel documents,
where the telex message for special services regarding passenger travel documents includes a passenger list record number and an action code;
S102: obtaining a customer travel record with the same passenger record number based on a passenger list record number;
S103: determining a target processing method corresponding to a type of the action code; and
S104: completing processing of the telex message for special services regarding passenger travel documents based on the customer travel record and the target processing method.

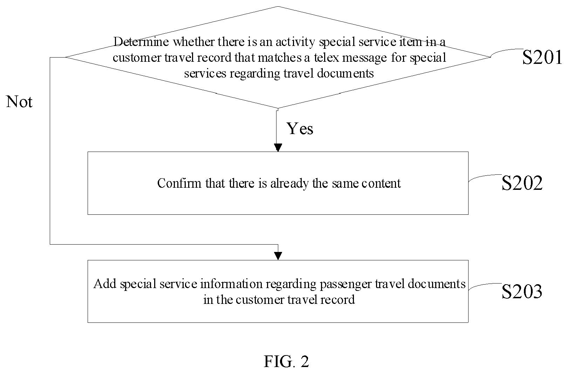

Optionally, in another embodiment of the present application, if the type of the action code is HK, an implementation of step S104, as shown in FIG. 2, includes:
S201: determining whether there is an activity special service item in the customer travel record that matches the telex message for special services regarding travel documents, where
specifically, if it is determined that there is the activity special service item in the customer travel record that matches the telex message for special services regarding travel documents, step S202 is performed; or if it is determined that there is no activity special service item in the customer travel record that matches the telex message for special services regarding travel documents, step S203 is performed;
S202: confirming that there is already the same content; and
S203: adding special service information regarding passenger travel documents in the customer travel record,
where the special service information regarding passenger travel documents contains two parts of general content and specific content, the general content includes an SSR type, an airline, an action code, the number of associated passengers, whether it is an automatic type, an associated flight departure city, an associated flight destination city, an associated flight number, an associated flight suffix, an associated flight class, an associated flight date, a free text, a creation sequence number, whether it is an inactive element, whether it is a public item, and a sequence number in the customer travel record, and the specific content includes a passenger travel document type, a passenger travel document issuing country, a passenger travel document number, a passenger's date of birth recorded on a passenger travel document, passenger's gender recorded on the passenger travel document, an expiration date of the passenger travel document, a passenger's surname recorded on the passenger travel document, and a passenger's first name recorded on the passenger travel document.

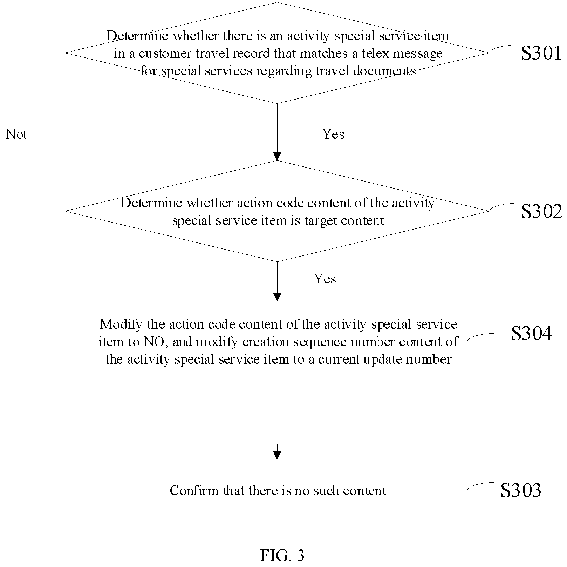

Optionally, in another embodiment of the present application, if the type of the action code is NO, an implementation of step S104, as shown in FIG. 3, includes:
S301: determining whether there is an activity special service item in the customer travel record that matches the telex message for special services regarding travel documents, where
specifically, if it is determined that there is the activity special service item in the customer travel record that matches the telex message for special services regarding travel documents, step S302 is performed; or if it is determined that there is no activity special service item in the customer travel record that matches the telex message for special services regarding travel documents, step S303 is performed;
S302: determining whether action code content of the activity special service item is target content,
where the target content is HK;
it is to be noted that, in the actual application process, the target content is preset and modified by a technician or a relevant authorized staff, with no limitations herein; and
specifically, if it is determined that the action code content of the activity special service item is the target content, step S304 is performed;
S304: modifying the action code content of the activity special service item to NO, and modifying creation sequence number content of the activity special service item to a current update number; and
S303: confirming that there is no such content.

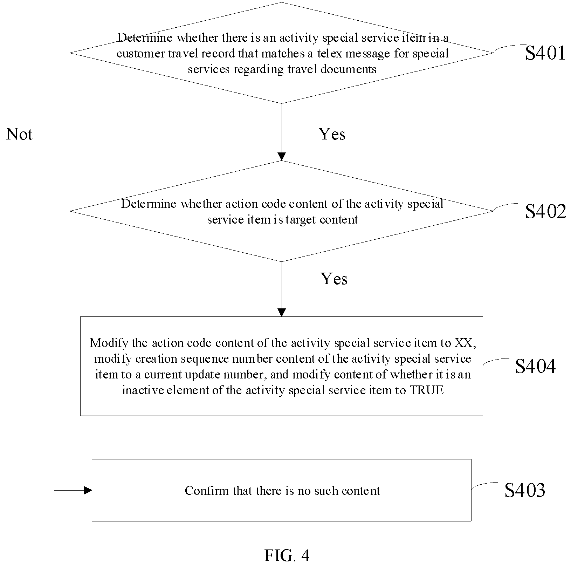

Optionally, in another embodiment of the present application, if the type of the action code is HX or XX, an implementation of step S104, as shown in FIG. 4, includes:
S401: determining whether there is an activity special service item in the customer travel record that matches the telex message for special services regarding travel documents, where
specifically, if it is determined that there is the activity special service item in the customer travel record that matches the telex message for special services regarding travel documents, step S402 is performed; or if it is determined that there is no activity special service item in the customer travel record that matches the telex message for special services regarding travel documents, step S403 is performed;
S402: determining whether action code content of the activity special service item is target content,
where the target content is HK;
it is to be noted that, in the actual application process, the target content is preset and modified by a technician or a relevant authorized staff, with no limitations herein; and
specifically, if it is determined that the action code content of the activity special service item is the target content, step S404 is performed;
S404: modifying the action code content of the activity special service item to XX, modifying creation sequence number content of the activity special service item to a current update number, and modifying content of whether it is an inactive element of the activity special service item to TRUE; and
S403: confirming that there is no such content.

It is to be noted that, in the practical application process of the present application, the type of the action code is not only limited to HK, NO, HX, or XX above, with no limitations herein.

Similarly, the target processing method corresponding to the type of the action code is preset and modified by the technician or the relevant authorized staff, with no limitations herein.

It can be seen from the above solution that the present application provides a telex message processing method, including: receiving a telex message for special services regarding passenger travel documents, where the telex message for special services regarding passenger travel documents includes a passenger list record number and an action code; obtaining a customer travel record with the same passenger record number based on the passenger list record number; then, determining a target processing method corresponding to a type of the action code; and finally, completing processing of the telex message for special services regarding passenger travel documents based on the customer travel record and the target processing method. Thus, the processing of the telex message for special services regarding passenger travel documents that includes different types of action codes is achieved.

The flowcharts and block diagrams in the accompanying drawings show the system architectures, functions, and operations possibly implemented by systems, methods, and computer program products according to various embodiments of the present application. In this regard, each block in the flowcharts or block diagrams may represent a module, a program segment, or a part of a code, and the module, the program segment, or the part of the code includes one or more executable instructions for implementing a specified logical function. It should also be noted that, in some alternative implementations, functions marked in the blocks may also occur in a sequence different from that marked in the accompanying drawings. For example, two consecutive blocks may be actually executed substantially in parallel, or sometimes may be executed in a reverse order, depending on a function related. It should also be noted that each box in the block diagram and/or flowchart, and a combination of the boxes in the block diagram and/or flowchart can be implemented by a dedicated hardware-based system that performs a prescribed function or operation, or by a combination of specialized hardware and computer instructions.

Names of messages or information exchanged among a plurality of apparatuses in the embodiments of the present application are for illustrative purposes only and are not intended to limit the scope of such messages or information.

Computer program codes for performing the operations in the present application can be written in one or more programming languages or a combination thereof. The programming languages include but are not limited to an object-oriented programming language, such as Python, Java, and C++, and also include a conventional procedural programming language, such as a "C" language or a similar programming language. The program codes can be executed entirely on a user computer, partially executed on the user computer, executed as a separate software package, partially executed on the user computer and partially executed on a remote computer, or entirely executed on the remote computer or a server. When a remote computer is involved, the remote computer can be connected to a user computer by using any type of network, including a local area network (LAN) or a wide area network (WAN), or can be connected to an external computer (e.g., connected by using an Internet service provider through the Internet).

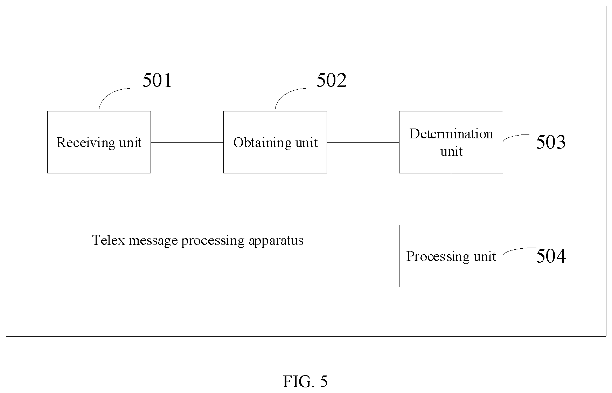

Another embodiment of the present application provides a telex message processing apparatus, as shown in FIG. 5, specifically including:
a receiving unit 501, configured to receive a telex message for special services regarding passenger travel documents,
where the telex message for special services regarding passenger travel documents includes a passenger list record number and an action code;
an obtaining unit 502, configured to obtain a customer travel record with the same passenger record number based on the passenger list record number;
a determination unit 503, configured to determine a target processing method corresponding to a type of the action code; and
a processing unit 504, configured to complete processing of the telex message for special services regarding passenger travel documents based on the customer travel record and the target processing method.

For the specific working processes of the units provided in the above embodiments of the present application, reference can be made to the content of the corresponding method embodiments, as shown in FIG. 1, and details will not be repeated herein.

Optionally, in another embodiment of the present application, if the type of the action code is HK, an implementation of the processing unit 504 includes:
a first determination unit, configured to determine whether there is an activity special service item in the customer travel record that matches the telex message for special services regarding travel documents;
a first confirmation unit, configured to confirm that there is already the same content if the first determination unit determines that there is the activity special service item in the customer travel record that matches the telex message for special services regarding travel documents; and
an addition unit, configured to add, if the first determination unit determines that there is no activity special service item in the customer travel record that matches the telex message for special services regarding travel documents, special service information regarding passenger travel documents in the customer travel record,
where the special service information regarding passenger travel documents contains two parts of general content and specific content, the general content includes an SSR type, an airline, an action code, the number of associated passengers, whether it is an automatic type, an associated flight departure city, an associated flight destination city, an associated flight number, an associated flight suffix, an associated flight class, an associated flight date, a free text, a creation sequence number, whether it is an inactive element, whether it is a public item, and a sequence number in the customer travel record, and the specific content includes a passenger travel document type, a passenger travel document issuing country, a passenger travel document number, a passenger's date of birth recorded on a passenger travel document, passenger's gender recorded on the passenger travel document, an expiration date of the passenger travel document, a passenger's surname recorded on the passenger travel document, and a passenger's first name recorded on the passenger travel document.

For the specific working processes of the units provided in the above embodiments of the present application, reference can be made to the content of the corresponding method embodiments, as shown in FIG. 2, and details will not be repeated herein.

Optionally, in another embodiment of the present application, if the type of the action code is NO, an implementation of the processing unit 504 includes:
a second determination unit, configured to determine whether there is an activity special service item in the customer travel record that matches the telex message for special services regarding travel documents;
a third determination unit, configured to determine whether action code content of the activity special service item is target content if the second determination unit determines that there is the activity special service item in the customer travel record that matches the telex message for special services regarding travel documents,
where the target content is HK or KK;
a first modification unit, configured to modify, if the third determination unit determines that the action code content of the activity special service item is the target content, the action code content of the activity special service item to NO, and modify creation sequence number content of the activity special service item to a current update number; and
a second confirmation unit, configured to confirm that there is no such content if the second determination unit determines that there is no activity special service item in the customer travel record that matches the telex message for special services regarding travel documents.

For the specific working processes of the units provided in the above embodiments of the present application, reference can be made to the content of the corresponding method embodiments, as shown in FIG. 3, and details will not be repeated herein.

Optionally, in another embodiment of the present application, if the type of the action code is HX or XX, an implementation of the processing unit 504 includes:
a fourth determination unit, configured to determine whether there is an activity special service item in the customer travel record that matches the telex message for special services regarding travel documents;
a fifth determination unit, configured to determine whether action code content of the activity special service item is target content if the fourth determination unit determines that there is the activity special service item in the customer travel record that matches the telex message for special services regarding travel documents,
where the target content is HK or KK;
a second modification unit, configured to modify, if the fourth determination unit determines that the action code content of the activity special service item is the target content, the action code content of the activity special service item to XX, modify creation sequence number content of the activity special service item to a current update number, and modify content of whether it is an inactive element of the activity special service item to TRUE; and
a third confirmation unit, configured to confirm that there is no such content if the fourth determination unit determines that there is no activity special service item in the customer travel record that matches the telex message for special services regarding travel documents.

For the specific working processes of the units provided in the above embodiments of the present application, reference can be made to the content of the corresponding method embodiments, as shown in FIG. 4, and details will not be repeated herein.

It can be seen from the above solution that the present application provides a telex message processing apparatus: a receiving unit 501 receives a telex message for special services regarding passenger travel documents, where the telex message for special services regarding passenger travel documents includes a passenger list record number and an action code; an obtaining unit 502 obtains a customer travel record with the same passenger record number based on the passenger list record number; then, a determination unit 503 determines a target processing method corresponding to a type of the action code; finally, a processing unit 504 completes processing of the telex message for special services regarding passenger travel documents based on the customer travel record and the target processing method. Thus, the processing of the telex message for special services regarding passenger travel documents that includes different types of action codes is achieved.

The functions described above herein can be performed, at least in part, by one or more hardware logic components. For example, hardware logic components that can be used as examples include, unlimitedly, a field-programmable gate array (FPGA), an application-specific integrated circuit (ASIC), an application-specific standard product (ASSP), a system-on-chip (SOC), a complex programmable logic device (CPLD), and the like.

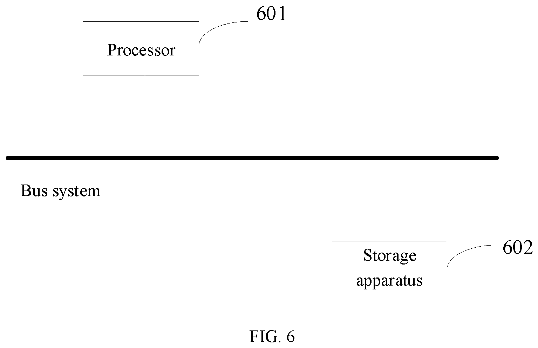

Another embodiment of the present application provides an electronic device, as shown in FIG. 6, including:
one or more processors 601; and
a storage apparatus 602 having one or more programs stored thereon.

When the one or more programs are executed by the one or more processors 601, the one or more processors 601 implement the telex message processing method according to any one of the above embodiments.

Another embodiment of the present application provides a computer storage medium having a computer program stored thereon, where when the computer program is executed by a processor, the telex message processing method according to any one of the above embodiments is implemented.

In the context of the present application, a machine-readable medium may be a tangible medium that can contain or store a program for use by or in combination with an instruction execution system, apparatus, or device. The machine-readable medium may be either a machine-readable signal medium or machine-readable storage medium. The machine-readable medium may include, but is not limited to, an electronic, magnetic, optical, electromagnetic, infrared, or semiconductor system, apparatus, or device, or any proper combination thereof. A more specific example of the machine-readable storage medium includes an electrical connection based on one or more wires, a portable computer disk, a hard disk, a random access memory (RAM), a read-only memory (ROM), an erasable programmable read-only memory (EPROM or flash memory), an optical fiber, a compact disk read-only memory (CD-ROM), an optical storage device, a magnetic storage device, or any proper combination thereof.

It is to be noted that the above computer-readable medium in the present application may be a computer-readable signal medium, a computer-readable storage medium, or any combination thereof. The computer-readable storage medium may be, for example, but not limited to, an electrical, magnetic, optical, electromagnetic, infrared, or semiconductor system, apparatus, or device, or any combination thereof. A more specific example of the computer-readable storage medium may include, but is not limited to, an electrical connection with one or more wires, a portable computer disk, a hard disk, a random access memory (RAM), a read-only memory (ROM), an erasable programmable read-only memory (EPROM or flash), an optical fiber, a portable compact disk read-only memory (CD-ROM), an optical storage device, a magnetic storage device, or any proper combination of thereof. In the present application, the computer-readable storage medium may be any tangible medium containing or storing a program that can be used by or in combination with an instruction execution system, apparatus, or device. In the present application, the computer-readable signal medium may include a data signal propagated in a baseband or propagated as a part of a carrier, where the data signal carries computer-readable program codes. Such a propagated data signal may be in a variety of forms, including but not limited to an electromagnetic signal, an optical signal, or any suitable combination thereof. The computer-readable signal medium may alternatively be any computer-readable medium other than the computer-readable storage medium. The computer-readable signal medium may send, propagate, or transmit the program used by the instruction execution system, apparatus, or device, or used in combination with the instruction execution system, apparatus, or device. The program code included in the computer-readable medium may be transmitted by using any suitable medium, including but not limited to Wi-Fi, a wire, an optical cable, RF (radio frequency), and the like, or any suitable combination thereof.

The computer-readable medium may be included in the electronic device, or exist alone and be not integrated into the electronic device.

Another embodiment of the present application provides a computer program product which, when executed, is configured to implement the telex message processing method according to any one of the above.

In particular, according to the embodiments of the present application, the process described above with reference to the flowchart can be implemented as a computer software program. For example, an embodiment of the present application includes a computer program product that includes a computer program carried on a non-transient computer-readable medium, and the computer program includes program code for executing a method shown in the flowchart. In such embodiment, the computer program may be downloaded and installed from a network through the communication apparatus, installed from the storage apparatus, or installed from the ROM. When the computer program is executed by the processing apparatus, the above functions defined in the method of the embodiment of the present application are performed.

Although the subject matter has been described in language specific to structural features and/or methodological logical actions, it should be understood that the subject matter defined in the appended claims is not necessarily limited to the specific features or actions described above. Rather, the specific features and actions described above are merely example forms of implementing the claims.

Although several specific implementation details are included in the above description, these should not be interpreted as limiting the scope of the present application. Some features described in the context of individual embodiments may also be implemented in combination in a single embodiment. Conversely, the various features described in the context of a single embodiment may also be implemented individually or in any suitable sub-combination in a plurality of embodiments.

The above description only covers the preferred embodiments of the present application and the explanation of the technical principles applied. Those skilled in the art should understand that the scope of application involved in the present application is not limited to the technical solutions formed by the specific combination of the above technical features, and should also cover other technical solutions formed by any combination of the above technical features or their equivalent features without departing from the above application concept. For example, there exist technical solutions that are formed by mutually replacing the above features with the technical features having similar functions (but not limited to) disclosed in the present application.

## Claims

1. A telex message processing method, **characterized by** comprising:
receiving a telex message for special services regarding passenger travel documents, wherein the telex message for special services regarding passenger travel documents comprises a passenger list record number and an action code;
obtaining a customer travel record with the same passenger record number based on the passenger list record number;
determining a target processing method corresponding to a type of the action code; and
completing processing of the telex message for special services regarding passenger travel documents based on the customer travel record and the target processing method.

2. The telex message processing method according to claim 1, **characterized in that** if the type of the action code is HK, the completing processing of the telex message for special services regarding passenger travel documents based on the customer travel record and the target processing method comprises:
determining whether there is an activity special service item in the customer travel record that matches the telex message for special services regarding travel documents;
if it is determined that there is the activity special service item in the customer travel record that matches the telex message for special services regarding travel documents, confirming that there is already the same content; or
if it is determined that there is no activity special service item in the customer travel record that matches the telex message for special services regarding travel documents, adding special service information regarding passenger travel documents in the customer travel record, wherein the special service information regarding passenger travel documents contains two parts of general content and specific content, the general content comprises an SSR type, an airline, an action code, the number of associated passengers, whether it is an automatic type, an associated flight departure city, an associated flight destination city, an associated flight number, an associated flight suffix, an associated flight class, an associated flight date, a free text, a creation sequence number, whether it is an inactive element, whether it is a public item, and a sequence number in the customer travel record, and the specific content comprises a passenger travel document type, a passenger travel document issuing country, a passenger travel document number, a passenger's date of birth recorded on a passenger travel document, passenger's gender recorded on the passenger travel document, an expiration date of the passenger travel document, a passenger's surname recorded on the passenger travel document, and a passenger's first name recorded on the passenger travel document.

3. The telex message processing method according to claim 1, **characterized in that** if the type of the action code is NO, the completing processing of the telex message for special services regarding passenger travel documents based on the customer travel record and the target processing method comprises:
determining whether there is an activity special service item in the customer travel record that matches the telex message for special services regarding travel documents;
if it is determined that there is the activity special service item in the customer travel record that matches the telex message for special services regarding travel documents, determining whether action code content of the activity special service item is target content, wherein the target content is HK;
if it is determined that the action code content of the activity special service item is the target content, modifying the action code content of the activity special service item to NO, and modifying creation sequence number content of the activity special service item to a current update number; or
if it is determined that there is no activity special service item in the customer travel record that matches the telex message for special services regarding travel documents, confirming that there is no such content.

4. The telex message processing method according to claim 1, **characterized in that** if the type of the action code is HX or XX, the completing processing of the telex message for special services regarding passenger travel documents based on the customer travel record and the target processing method comprises:
determining whether there is an activity special service item in the customer travel record that matches the telex message for special services regarding travel documents;
if it is determined that there is the activity special service item in the customer travel record that matches the telex message for special services regarding travel documents, determining whether action code content of the activity special service item is target content, wherein the target content is HK;
if it is determined that the action code content of the activity special service item is the target content, modifying the action code content of the activity special service item to XX, modifying creation sequence number content of the activity special service item to a current update number, and modifying content of whether it is an inactive element of the activity special service item to TRUE; or
if it is determined that there is no activity special service item in the customer travel record that matches the telex message for special services regarding travel documents, confirming that there is no such content.

5. A telex message processing apparatus, **characterized by** comprising:
a receiving unit, configured to receive a telex message for special services regarding passenger travel documents, wherein the telex message for special services regarding passenger travel documents comprises a passenger list record number and an action code;
an obtaining unit, configured to obtain a customer travel record with the same passenger record number based on the passenger list record number;
a determination unit, configured to determine a target processing method corresponding to a type of the action code; and
a processing unit, configured to complete processing of the telex message for special services regarding passenger travel documents based on the customer travel record and the target processing method.

6. The telex message processing apparatus according to claim 5, **characterized in that** if the type of the action code is HK, the processing unit comprises:
a first determination unit, configured to determine whether there is an activity special service item in the customer travel record that matches the telex message for special services regarding travel documents;
a first confirmation unit, configured to confirm that there is already the same content if the first determination unit determines that there is the activity special service item in the customer travel record that matches the telex message for special services regarding travel documents;
an addition unit, configured to add, if the first determination unit determines that there is no activity special service item in the customer travel record that matches the telex message for special services regarding travel documents, special service information regarding passenger travel documents in the customer travel record, wherein the special service information regarding passenger travel documents contains two parts of general content and specific content, the general content comprises an SSR type, an airline, an action code, the number of associated passengers, whether it is an automatic type, an associated flight departure city, an associated flight destination city, an associated flight number, an associated flight suffix, an associated flight class, an associated flight date, a free text, a creation sequence number, whether it is an inactive element, whether it is a public item, and a sequence number in the customer travel record, and the specific content comprises a passenger travel document type, a passenger travel document issuing country, a passenger travel document number, a passenger's date of birth recorded on a passenger travel document, passenger's gender recorded on the passenger travel document, an expiration date of the passenger travel document, a passenger's surname recorded on the passenger travel document, and a passenger's first name recorded on the passenger travel document.

7. The telex message processing apparatus according to claim 5, **characterized in that** if the type of the action code is NO, the processing unit comprises:
a second determination unit, configured to determine whether there is an activity special service item in the customer travel record that matches the telex message for special services regarding travel documents;
a third determination unit, configured to determine whether action code content of the activity special service item is target content if the second determination unit determines that there is the activity special service item in the customer travel record that matches the telex message for special services regarding travel documents, wherein the target content is HK or KK;
a first modification unit, configured to modify, if the third determination unit determines that the action code content of the activity special service item is the target content, the action code content of the activity special service item to NO, and modify creation sequence number content of the activity special service item to a current update number; and
a second confirmation unit, configured to confirm that there is no such content if the second determination unit determines that there is no activity special service item in the customer travel record that matches the telex message for special services regarding travel documents.

8. The telex message processing apparatus according to claim 5, **characterized in that** if the type of the action code is HX or XX, the processing unit comprises:
a fourth determination unit, configured to determine whether there is an activity special service item in the customer travel record that matches the telex message for special services regarding travel documents;
a fifth determination unit, configured to determine whether action code content of the activity special service item is target content if the fourth determination unit determines that there is the activity special service item in the customer travel record that matches the telex message for special services regarding travel documents, wherein the target content is HK or KK;
a second modification unit, configured to modify, if the fourth determination unit determines that the action code content of the activity special service item is the target content, the action code content of the activity special service item to XX, modify creation sequence number content of the activity special service item to a current update number, and modify content of whether it is an inactive element of the activity special service item to TRUE; and
a third confirmation unit, configured to confirm that there is no such content if the fourth determination unit determines that there is no activity special service item in the customer travel record that matches the telex message for special services regarding travel documents.

9. An electronic device, **characterized by** comprising:
one or more processors; and
a storage apparatus having one or more programs stored thereon, wherein
when the one or more programs are executed by the one or more processors, the one or more processors implement the telex message processing method according to any one of claims 1 to 4.

10. A computer storage medium **characterized by** having a computer program stored thereon, wherein when the computer program is executed by a processor, the telex message processing method according to any one of claims 1 to 4 is implemented.
